# EUROPÄISCHE PATENTANMELDUNG

(11) **EP 4 796 794 A1**
(43) Veröffentlichungstag der Anmeldung: **26.08.2026**
(21) Anmeldenummer: 26157717.5
(22) Anmeldetag: 11.02.2026
(51) Int. Cl.: F16B 7/18, F16B 31/04

(54) **SCHWINGUNGSFESTES MASCHINENGESTELL MIT ALUMINIUMPROFILEN**

(30) Priorität: 19.02.2025 EP 25158832
(71) Anmelder: Mehltretter, J. Michael, 82049 Pullach (DE)
(72) Erfinder: Mehltretter, J. Michael, 82049 Pullach (DE)
(74) Vertreter: Lohr, Jöstingmeier & Partner Patent- und Rechtsanwälte mbB

(57) **Zusammenfassung**

Maschinengestell 500 mit einer Trägerkonstruktion umfassend ein Aluminium-Strebenprofil 510 sowie wenigstens ein weiteres Bauteil 520. Das Aluminium-Strebenprofil hat eine Länge und wenigstens einem Hohlraum, der sich über die Länge erstreckt. Das wenigstens eine weitere Bauteil ist mittels wenigstens einem Spannelement 550 mit dem Aluminium-Strebenprofil verspannt, wobei sich das wenigstens eine Spannelement innerhalb des wenigstens einen Hohlraums über die erste Länge erstreckt, und wobei das wenigstens eine Spannelement auf das Aluminium-Strebenprofil in Längsrichtung eine Druckkraft ausübt.

## Beschreibung

### Technisches Gebiet

Die Erfindung betrifft ein Maschinengestell mit Aluminiumprofilen sowie Komponenten für ein solches Maschinengestell, wie eine Trägerkonstruktion. Das Maschinengestell bzw. dessen Komponenten können Schwingungsbelastungen über längere Zeiträume widerstehen.

### Stand der Technik

Ein Maschinengestell, auch Maschinenbasis genannt, dient dazu, eine Maschine oder eine Anlage zu tragen und zu stabilisieren. Es gibt verschiedene Arten von Maschinengestellen, die für verschiedene Anwendungen entwickelt wurden. Ein Maschinengestell kann aus verschiedenen Materialien wie Stahl, Aluminium oder Kunststoff hergestellt sein und kann in verschiedenen Größen und Formen erhältlich sein, um den Anforderungen der Maschine oder Anlage gerecht zu werden, die es tragen soll. Beispiele solcher Maschinen oder Anlagen sind Kompressoren, Spritzgussmaschinen, Schwingförderer und andere.

Ein Maschinengestell ist in der Regel so konstruiert, dass es die Belastungen und Kräfte aufnehmen kann, die während des Betriebs der Maschine oder Anlage auftreten. Es kann auch dazu beitragen, die Maschine oder Anlage vor äußeren Einflüssen wie Vibrationen, Schocks und Stößen zu schützen.

Ein Maschinengestell kann auch dazu dienen, die Maschine oder Anlage zu installieren und zu bewegen. Es kann mit Rollen oder Rädern ausgestattet sein, um es leicht zu transportieren, oder es kann in einem festen Rahmen montiert werden, um es an einem bestimmten Ort zu sichern.

Die DE 10 2009 023 598 A1 offenbart eine Maschinenbasis aus Stahlrohr, auf die Vibrationen, die beim Betrieb einer Spritzgussmaschine entstehen, übertragen werden.

Stahl ist gut geeignet für die Herstellung von Maschinengestellen, da es eine hohe Tragfähigkeit und Steifigkeit aufweist und auch kostengünstig ist. Es gibt einige spezifische Vorteile, die Maschinengestelle aus Stahl bieten, insbesondere in Bezug auf die Schwingungsfestigkeit. Dies bedeutet, dass Maschinengestelle aus Stahl in der Lage sind, die Schwingungen, die während des Betriebs der Maschine oder Anlage auftreten, gut zu absorbieren und zu minimieren. Dies ist besonders wichtig, wenn die Maschine oder Anlage in einer Umgebung betrieben wird, in der starke Vibrationen oder Schocks auftreten können, da diese Belastungen die Maschine oder Anlage beschädigen oder sogar zerstören können.

Ein weiterer Vorteil von Maschinengestellen aus Stahl ist, dass sie sehr langlebig sind. Sie sind in der Regel in der Lage, hohe Belastungen und Kräfte auf lange Sicht aufzunehmen, ohne zu brechen oder sich zu verformen. Dies bedeutet, dass sie auch in harten Industrieumgebungen lange Zeit problemlos funktionieren können, ohne dass regelmäßige Wartung oder Reparaturen erforderlich sind.

Allerdings haben Maschinengestelle aus Stahl auch eine Reihe von Nachteilen. So haben sie ein relativ hohes Gewicht und sind damit oft schwer zu transportieren. Weiterhin benötigen Bauteile aus Stahl einen Korrosionsschutz, wie beispielsweise eine Lackierung oder Oberflächenbeschichtung, der auch in größeren Intervallen ausgebessert oder ersetzt werden muss. Zudem sind Maschinengestelle aus Stahl aufgrund ihrer Struktur meist optisch wenig ansprechend und können auch nur mit großem Aufwand an neue Aufgaben angepasst bzw. verändert werden.

Grundsätzlich wäre auch Aluminium, insbesondere als Aluminium-Strebenprofil für Maschinengestelle geeignet. Derartige Aluminium-Strebenprofile sind beispielsweise in dem Katalog "Mechanik-Grundelemente" der Bosch Rexroth AG, Material-Nr.: 3 842 540 391 (2019-07) offenbart. Allerdings lassen sich mit Aluminium-Strebenprofilen keine Verbindungen herstellen, die auf lange Zeit Vibrationen widerstehen können. So werden diese Profile durch Schraubverbindungen mit in Aluminium geschnittene Gewinde oder durch Festklemmen in Nuten der Profile miteinander verbunden. Diese Verbindungen lockern sich unter Langzeit-Vibrationsbelastung und müssen daher regelmäßig überprüft und ggf. nachgezogen werden.

### Darstellung der Erfindung

Der Erfindung liegt die Aufgabe zugrunde, eine Alternative zu vibrationsfesten Maschinengestellen bzw. zu Trägerkonstruktionen für Maschinengestelle aus Stahl zu finden, die die oben genannten Nachteile vermeidet.

Diese Aufgabe wird durch eine Vorrichtung nach Anspruch 1 gelöst. Vorteilhafte Ausgestaltungen der Erfindung sind in den Unteransprüchen angegeben.

Ein Maschinengestell kann mehrere Komponenten wie beispielsweise eine Trägerkonstruktion umfassen. Eine Trägerkonstruktion umfasst ein erstes Aluminium-Strebenprofil sowie wenigstens ein weiteres Aluminium-Strebenprofil. Zudem kann wenigstens ein weiteres Bauteil vorgesehen sein. Solch ein weiteres Bauteil kann ein weiteres Aluminium-Strebenprofil, ein Befestigungselement, eine Maschine oder ein beliebiges anderes Teil sein. Das wenigstens eine weitere Aluminium-Strebenprofil ist mittels wenigstens einem Spannelement mit dem ersten Aluminium-Strebenprofil verspannt. "verspannt" bedeutet hier in erster Linie eine kraftschlüssige Verbindung zwischen den Aluminium-Strebenprofilen.

Ein Aluminium-Strebenprofil ist ein langgestrecktes Bauteil aus Aluminium, welches bevorzugt entlang seiner Länge eine konstante Geometrie aufweist. Es wird auch Konstruktionsprofil, Hohlkammerprofile, Montageprofil oder Nutenprofil genannt. Ein solches Strebenprofil könnte beispielsweise durch Extrusion hergestellt sein, es kann somit ein Extrusionsprofil sein. Solche Aluminium-Strebenprofile werden bevorzugt mit Querschnitten von 20 x 20 mm bis 200 x 200 mm hergestellt. Die Länge solcher Profile kann in praktischen Einsatzfällen zwischen wenigen Zentimetern und einigen Metern sein. Ein typisches Maschinengestell, welches beispielsweise eine Grundfläche von 1 m x 2 m besitzt, kann somit durch Strebenprofile mit 1 beziehungsweise 2 m Länge hergestellt werden. Je nach erforderlicher Stabilität können kleinere oder größere Querschnitte hierzu ausgewählt werden. Ein Aluminium-Strebenprofil kann wenigstens einen Hohlraum und/oder wenigstens eine Nut in Längsrichtung aufweisen. Der Hohlraum beziehungsweise die Nut kann sich über die ganze Länge des Profils erstrecken. Um nun ein weiteres erstes Aluminium-Strebenprofil an dem ersten Aluminium-Strebenprofil zu befestigen, wird ein Spannelement innerhalb eines Hohlraums beziehungsweise einer Nut in Längsrichtung des Aluminium-Strebenprofils angeordnet. Besonders günstig ist die Anordnung in einem Hohlraum. Das Spannelement übt auf das Aluminium-Strebenprofil in Richtung dessen Länge eine Drucckraft (Spannkraft) aus, mittels der auch das wenigstens eine weitere Aluminium-Strebenprofil mit dem ersten Aluminium-Strebenprofil verspannt wird. Eine zusätzliche Befestigung, beispielsweise über Gewinde im Aluminium-Strebenprofil ist nicht mehr notwendig.

In typischen Einsatzfällen können Aluminium-Strebenprofile insbesondere für Maschinengestelle in Längen zwischen 20 cm und 3 m verwendet werden. Entsprechend haben die Spannelemente eine Länge in diesem Bereich. Typischerweise sind sie etwas länger, da die Spannelemente auch die weiteren Bauteile und zusätzliche Befestigungs- beziehungsweise Klemmelemente, wie beispielsweise Muttern, umfassen müssen.

Um nun eine vibrationsfeste Verbindung zu gewährleisten, wird das Spannelement derart vorgespannt, dass es in seiner Längsrichtung eine relative Dehnung aufweist. Diese Dehnung ist bevorzugt in einem Bereich > 20% der Streckgrenze, oder auch der 0,2% Dehngrenze (welche meist verwendet wird, wenn die Streckgrenze nicht eindeutig bestimmbar ist). Vorzugsweise liegt die relative Dehnung < 90% der Streckgrenze und besonders bevorzugt < 70% der Streckgrenze des Materials des wenigstens einen Spannelements. Dadurch wirkt das wenigstens eine Spannelement wie eine starke Feder und hält auch insbesondere bei vibrationsbedingten Veränderungen einen hohen Anpressdruck aufrecht, so dass eine stabile Verbindung über lange Zeit zwischen dem ersten Aluminium-Strebenprofil und dem wenigstens einen weiteren Aluminium-Strebenprofil gewährleistet ist.

Nachfolgend soll ein einfaches Dimensionierungsbeispiel an einem Aluminium-Strebenprofil mit einer Kantenlänge von 45 x 45 mm, einer Länge von 1 m und einem innen liegenden Stahlstab mit 10 mm Durchmesser gezeigt werden. Der Stahlstab bestehe aus einem einfachen Stahl mit einem Elastizitätsmodul von 210 Gpa. Die Streckgrenze des Stahls sei 275 Mpa. Daraus ergibt sich eine relative Dehnung an der Streckgrenze von 275 Mpa / 210 Gpa = 1,3 x 10-3, entsprechend 1,3 mm bei einer Stablänge von 1 m. Eine Dehnung bis zu 70% der Streckgrenze entspricht 0,9 mm. Bei der Montage wird die Verbindung beispielsweise über eine aufgeschraubte Mutter derart angezogen, dass sich der Stab um 0,9 mm dehnt. Gleichzeitig wird sich das Aluminiumprofil mit einem Elastizitätsmodul von 70 Gpa und einer Querschnittsfläche von 750 mm² um ca. 0,3 mm verkürzen.

Eine Trägerkonstruktion umfasst wenigstens ein erstes Aluminiumstrebenprofil sowie wenigstens ein weiteres Aluminiumstrebenprofil, welches mit dem ersten Aluminiumstrebenprofil verbunden ist. Das erste Aluminiumstrebenprofil weist wenigstens einen Hohlraum auf, der sich zumindest über einen Teil der ersten Länge des ersten Aluminiumprofils erstreckt. Ebenso können hier auch Aluminiumstrebenprofile mit mehreren, vorzugsweise parallelen, Hohlräumen verwendet werden. Insbesondere größere Profile weisen häufig mehrere solcher Hohlräume auf.

Wenigstens ein Querspannelement ist senkrecht zu wenigstens einem Hohlraum in einem vorgegebenen Abstand zu einem ersten Ende des ersten Aluminium-strebenprofils angeordnet. Das Querspannelement könnte beispielsweise in einer Querbohrung aufgenommen sein. Das Querspannelement selbst könnte beispielsweise einen kreisförmig oder einen teilkreisförmigen Querschnitt aufweisen, so dass es einfach in eine runde Bohrung einsetzbar ist.

Das erste Aluminiumstrebenprofil liegt mit seinem ersten Ende flächig auf dem wenigstens einen weiteren Aluminiumstrebenprofil auf und bildet dort eine Auflagefläche.

Weiterhin wird das erste Aluminiumstrebenprofil mit dem weiteren Aluminium-strebenprofil durch wenigstens eine Schraube verspannt. Diese Schraube erstreckt sich innerhalb des ersten Aluminiumstrebenprofils bis hin zu dem Querspannelement und greift mit ihrem Gewinde in ein Gewinde des Querspannelements ein. Mit ihrem Kopf liegt die wenigstens eine Schraube an dem einen weiteren Aluminiumstrebenprofil auf. Dadurch kann das erste Aluminiumstrebenprofil gegenüber dem zweiten Aluminiumstrebenprofil durch Drehen der Schraube verspannt werden. Da der Hohlraum vorzugsweise in Längsrichtung des ersten Aluminiumstrebenprofils verläuft, wird dieses auch vorzugsweise in dessen Längsrichtung gegenüber dem weiteren Aluminiumstrebenprofil verspannt.

Weiterhin ist ein Verstärkungselement innerhalb des weiteren Aluminiumstrebenprofils derart angeordnet, dass es einen Hohlraum des weiteren Aluminium-strebenprofils im Bereich der Auflagefläche zumindest weitgehend ausfüllt und zumindest im gespannten Zustand (bei angezogener Schraube) an dem ersten Aluminiumstrebenprofil anliegt. Hierdurch ergibt sich eine verbesserte Krafteinleitung zwischen dem ersten Aluminiumstrebenprofil und dem weiteren Aluminiumstrebenprofil. Einerseits vergrößert das Verstärkungselement die Auflagefläche und andererseits stabilisiert beziehungsweise versteift das Verstärkungselement das weitere Aluminiumstrebenprofil. Es kann insbesondere eine Verformung des weiteren Aluminiumstrebenprofils verhindern bzw. begrenzen.

In einer Ausführungsform durchdringt die wenigstens eine Schraube das wenigstens eine weitere Aluminiumstrebenprofil zumindest teilweise. Der Kopf der Schraube könnte an einer Außenfläche, gegenüberliegend der Auflagefläche, am weiteren Aluminiumstrebenprofil aufliegen. Er könnte aber auch an einer Innenfläche einer inneren Struktur des weiteren Aluminiumstrebenprofils aufliegen. Vorteilhafterweise liegt diese innere Struktur wiederum an dem Verstärkungselement an, so dass sich eine besonders günstige Krafteinleitung zwischen der Schraube über das Verstärkungselement in das erste Aluminiumstrebenprofil ergibt.

Die wenigstens eine Schraube und/oder das Verstärkungselement und/oder das Querspannelement umfassen bevorzugt ein Material mit einer höheren Festigkeit und/oder Biegesteifigkeit als die Aluminiumstrebenprofile, wie beispielsweise Stahl. Dadurch ergibt sich eine geringere Verformung dieser Komponenten und eine bessere und gleichmäßigere Auflage auf beziehungsweise innerhalb der Aluminiumstrebenprofile.

Das Spannelement kann beispielsweise eine Gewindestange odre Schraube sein, so dass an deren Enden auf einfache Weise Muttern aufgeschraubt werden können, welche dann wenigstens ein weiteres Aluminium-Strebenprofil mit dem ersten Aluminium-Strebenprofil verspannen. Ebenso könnte auch ein Stahlstab oder ein Stahlrohr mit einem Gewinde verwendet werden. Alternativ wäre auch ein Stab oder ein Rohr mit zumindest einer Endplatte an einer Seite und einem Gewinde an der anderen Seite oder auch jede weitere Konstruktion denkbar, die eine Einstellung der Vorspannung ermöglicht.

Das erste Aluminium-Strebenprofil sollte von der Querschnittsfläche so dimensioniert werden, dass es eine geringere Stauchung erfährt als die Dehnung des Spannelements ist. Hierzu muss unter Berücksichtigung des Elastizitätsmoduls des Materials (Aluminium) die Querschnittsfläche des Aluminiumprofils entsprechend hoch gewählt werden. Das Elastizitätsmodul von Aluminium ist typischerweise ca. 30% des Elastizitätsmoduls von Stahl. Daher sollte die Querschnittsfläche des ersten Aluminium-Strebenprofils mindestens um den Faktor 3 größer sein als die Querschnittsfläche des Spannelements, falls hier Stahl eingesetzt werden soll. Selbst-verständlich können auch andere Materialien für das Spannelement eingesetzt werden. Derartige Materialien sind beispielsweise Titanlegierungen, Messinglegierungen und andere.

In einer Ausführungsform ist in wenigstens einer Nut eines weiteren Aluminium-Strebenprofils im Bereich der Durchtrittsstelle des Spannelements wenigstens ein Füllstück angeordnet. Es kann auch wenigstens ein Füllstück in wenigstens einer Nut, die vom Spannelement durchdrungen wird, angeordnet sein. Ein Füllstück hat bevorzugt ein dem Nutenprofil angepasstes Profil und besteht bevorzugt aus einem Metall wie beispielsweise Aluminium, Messing oder Stahl. Bevorzugt sind Füllstücke in Nuten seitlich zu den Nuten, die vom Spannelement durchdrungen werden, angeordnet. Wenigstens ein Füllstück trägt bevorzugt einen Teil der von dem Spannelement ausgeübten Kraft. Es kann eine gleichmäßigere Kraftverteilung auf einen bestimmten Bereich eines weiteren Aluminium-Strebenprofils bewirken und/oder das weitere Aluminium-Strebenprofil entlasten und so eine mögliche Verformung des weitere Aluminium-Strebenprofils verhindern.

Eine Trägerkonstruktion umfasst wenigstens ein Spannelement. Sie kann aber auch eine höhere Anzahl von Spannelementen umfassen. Dies können beispielsweise zwei, drei oder vier Spannelemente sein, welche alle bevorzugt in Hohlräumen des ersten Aluminium-Strebenprofils bzw. eines weiteren Aluminium-Strebenprofils angeordnet sind. Bevorzugt sind die Spannelemente symmetrisch angeordnet. Besonders günstig ist es, wenn jedes Spannelement in einem eigenen Hohlraum angeordnet ist.

Ein Maschinengestell umfasst wenigstens eine Trägerkonstruktion wie oben beschrieben. Es können auch mehrere derartige Trägerkonstruktionen miteinander zu einem Maschinengestell verbunden sein.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
Fig. 1 zeigt eine Schrägansicht einer ersten Ausführungsform.
Fig. 2 zeigt eine weitere Schrägansicht derselben Ausführungsform.
Fig. 3 zeigt die Schraube zusammen mit dem Querspannelement und dem Verstärkungselement.
Fig. 4 zeigt verschiedene Seitenansichten.
Fig. 5 und 6 zeigen Schnittansichten.
Fig. 7 zeigt verschiedene Ansichten des Verstärkungselementes.
Fig. 8 zeigt eine Schrägansicht einer weiteren Ausführungsform.
Fig. 9 zeigt eine weitere Schrägansicht derselben Ausführungsform.
Fig. 10 zeigt die Schrauben zusammen mit den Querspannelementen und dem Verstärkungselement.
Fig. 11 zeigt eine Schnittansicht.
Figur 12 zeigt eine räumliche Ansicht eines Ausführungsbeispiels.
Figur 13 zeigt eine teilgeschnittene Ansicht des Ausführungsbeispiels.
Figur 14 zeigt eine Seitenansicht des Ausführungsbeispiels.
Figur 15 zeigt eine weitere geschnittene Ansicht des Ausführungsbeispiels.
Figuren 16 -20 zeigen verschiedene Ausführungsformen im Schnitt.
Figur 21 zeigt eine schematische Anordnung.
Figur 22 zeigt ein Maschinengestell.
Figur 23 zeigt ein Maschinengestell mit einer Platte.
Figur 24 zeigt eine räumliche Ansicht eines Ausführungsbeispiels mit Füllstücken.
Figur 25 zeigt eine teilgeschnittene Ansicht des vorigen Ausführungsbeispiels.
Figur 26 zeigt eine weitere geschnittene Ansicht des Ausführungsbeispiels.

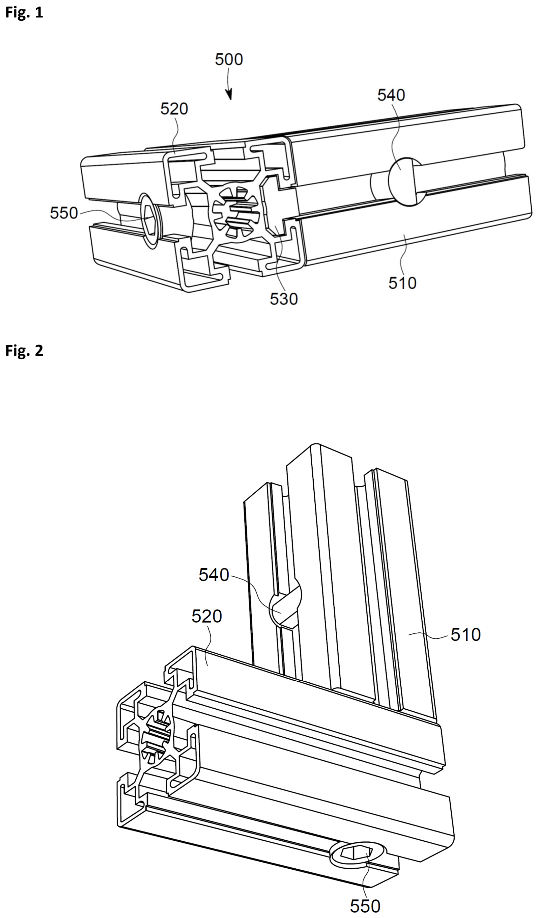

Fig. 1 und 2 zeigen eine Ausführungsform der Erfindung. Hier ist ein erstes Aluminiumstrebenprofil 510 an ein weiteres Aluminiumstrebenprofil 520 gespannt. Hierzu ist eine Schraube 550, z.B. eine Zylinderschraube DIN 912, durch eine Bohrung in dem weiteren Aluminiumstrebenprofil sowie durch das Verstärkungselement 530 mit dem Querspannelement 540 verbunden. Das Gewinde der Schraube 550 greift in ein Gewinde des Querspannelements ein. Wie gut zu erkennen ist, füllt das Verstärkungselement 530 im Wesentlichen einen Hohlraum in dem weiteren Aluminiumstrebenprofil 520 auf und sorgt somit für eine wesentlich bessere Krafteinleitung des Kopfs der Schraube 550 bis hin in das erste Aluminiumstrebenprofil 510. Das Verstärkungselement kann einen näherungsweise T-förmigen Querschnitt haben, wobei der Querbalken des T auf inneren Strukturen des weiteren Aluminiumstrebenprofils 520 aufliegen kann und/oder einen Hohlraum darin zumindest teilweise ausfüllen kann. Weiterhin kann die untere Seite des T auf dem ersten erste Aluminiumstrebenprofil 510 aufliegen.

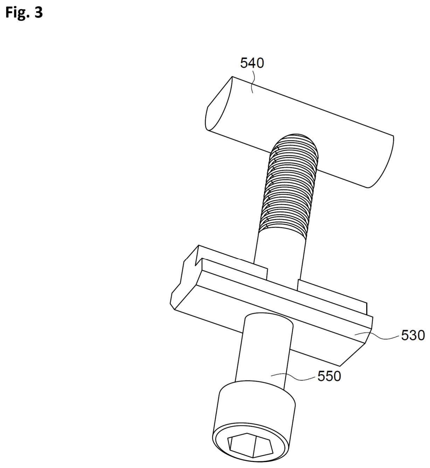

Fig. 3 zeigt im Detail eine Schraube 550 mit einem Verstärkungselement 530 und dem Querspannelement 540. Typischerweise ist die Schraube formschlüssig mittels ihres Gewindes mit dem Querspannelement 540 verbunden. Durch Drehen der Schraube kann eine Verspannung erreicht werden, welche die beiden Aluminiumstrebenprofile fest miteinander verspannt. Das Verstärkungselement 530 kann frei beweglich in Längsrichtung der Schraube sein. Die Schraube muss keine Kraft auf dieses Verstärkungselement ausüben. Vielmehr wird das Verstärkungselement mittelbar durch die Kraft der Schraube zwischen den beiden Aluminium-strebenprofilen eingespannt.

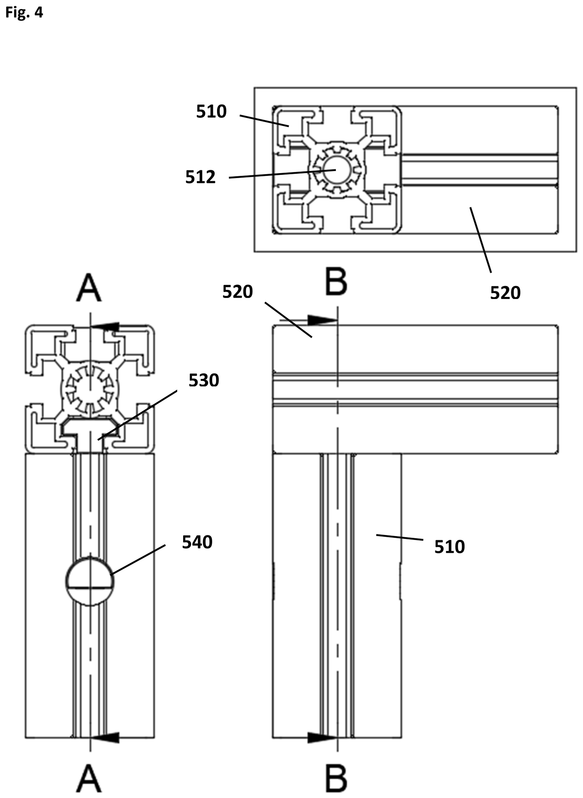

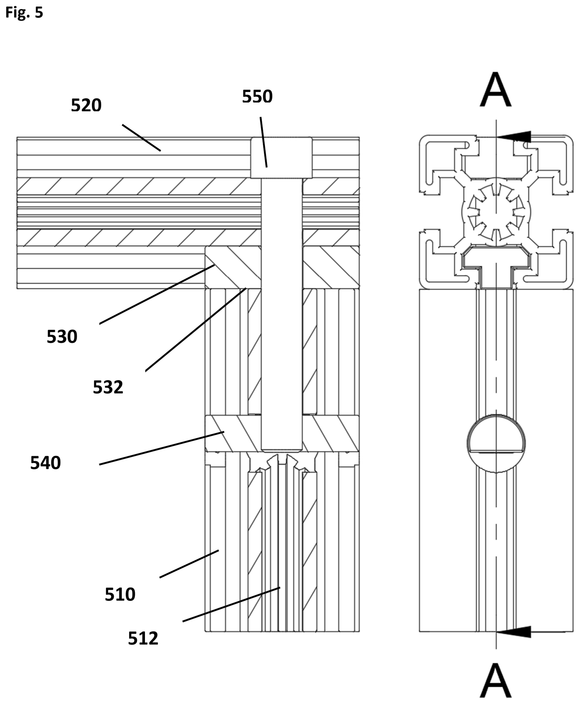

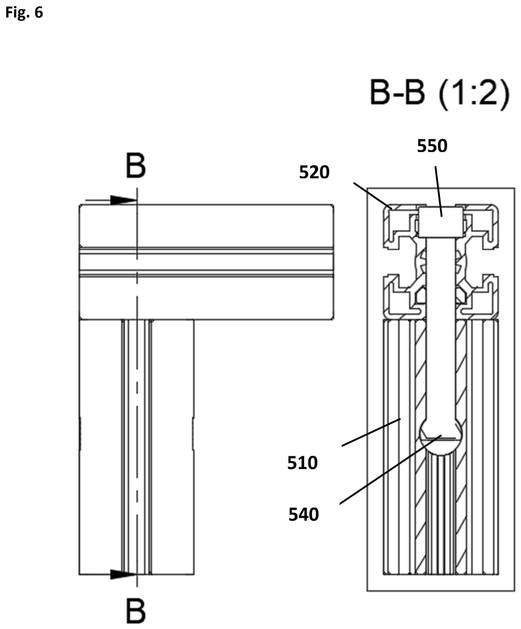

In den Fig. 4 bis 6 sind verschiedene Seiten- und Schnittansichten zur Erläuterung weiterer Details dargestellt.

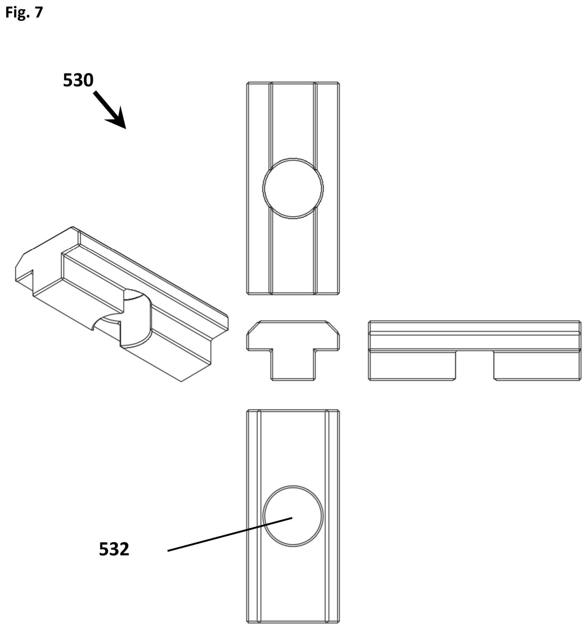

Die Fig. 7 zeigt verschiedene Ansichten des Verstärkungselementes. Das Verstärkungselement hat bevorzugt eine Kontur, die einem möglicherweise nach außen offenen Hohlraum des weiteren Aluminiumstrebenprofils angepasst ist, so dass dieses diesen Hohlraum im Bereich der Auflagefläche möglichst vollständig ausfüllt. Es kann allerdings geringfügig kleinere Abmessungen haben, so dass es noch leicht in den Hohlraum einschiebbar ist. Das Verstärkungselement umfasst vorzugsweise eine Bohrung 530, durch welche die Schraube hindurchgesteckt werden kann. Damit ist auch schon das Verstärkungselement während einer Montage fixiert und kann nicht mehr aus dem Profil herausgleiten. Das Verstärkungselement kann auch mehrere Bohrungen haben, falls mehrere parallele Schrauben eingesetzt werden. Zudem kann in dem Verstärkungselement auch eine Madenschraube, eine Feder oder ein anderes Element angeordnet sein, welches es erlaubt, bereits vor der Montage das Verstärkungselement innerhalb des weiteren Aluminiumstrebenprofils an einer vorgegebenen Position zu fixieren.

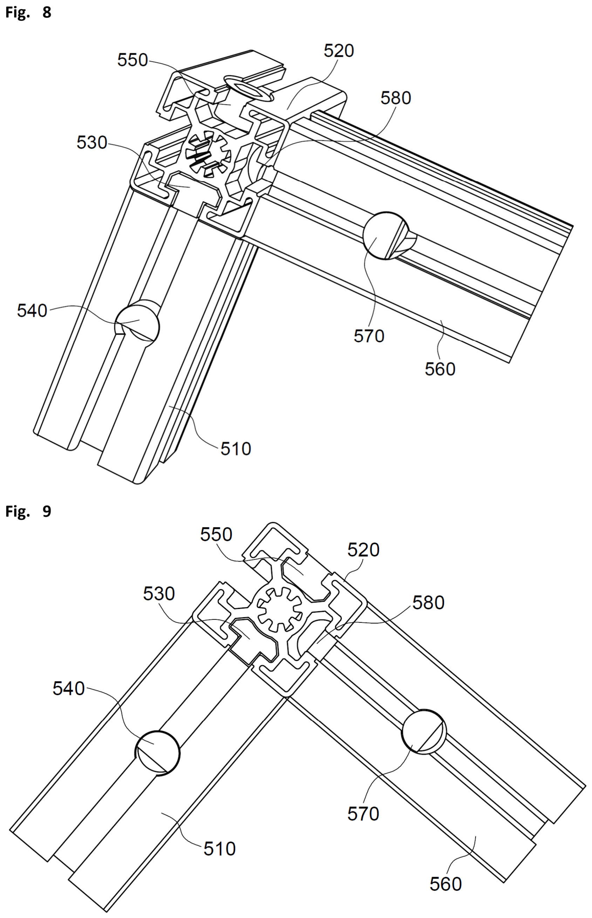

Fig. 8 zeigt eine Schrägansicht einer weiteren Ausführungsform mi drei Aluminiumstrebenprofien, die orthogonal zueinander angeordnet sind. Diese könne beispielsweise eine Ecke eines Rahmrens oder eines Maschinengestells ausbilden. Gegenüber der vorherigen Ausführungsform ist zusätzlich ein drittes Aluminium-strebenprofil 560 mit einem zweiten Querspannelement 570 vorgesehen. Diese werden mit einer zweiten Schraube, hier z.B. eine Halbrundkopf Inensechskantschraube nach ISO 7380 mit dem weiteren Aluminium-Strebenprofil 520 vebunden. Die Schraube kann hier in einer Nut bevorzugt an der Seite zum dritten Strebenprofil des weiteren Profils eingreifen.

Fig. 9 zeigt eine weitere Schrägansicht derselben Ausführungsform.

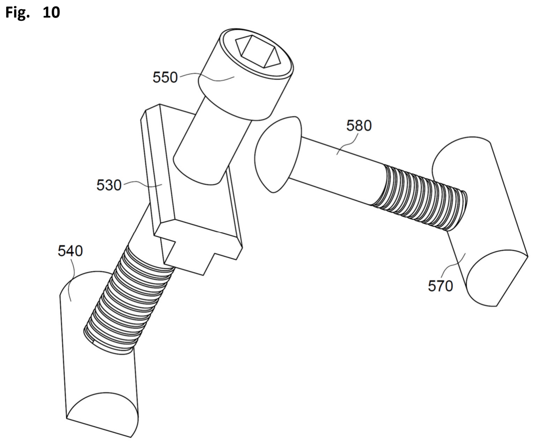

Fig. 10 zeigt die Schrauben zusammen mit den Querspannelementen und dem Verstärkungselement.

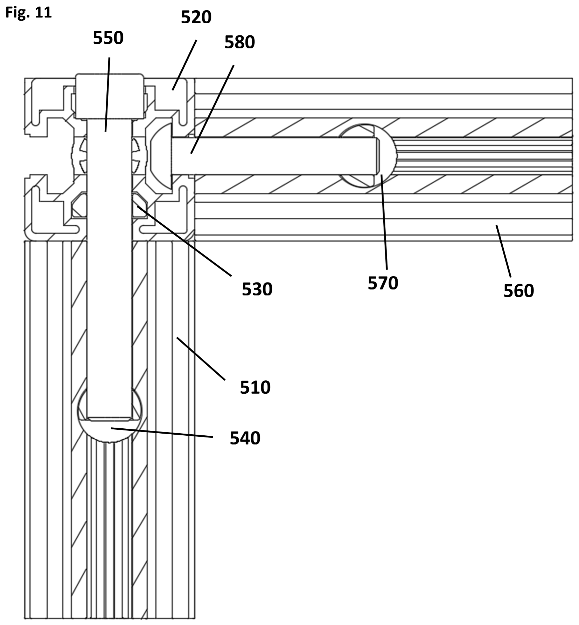

Fig. 11 zeigt eine Schnittansicht.

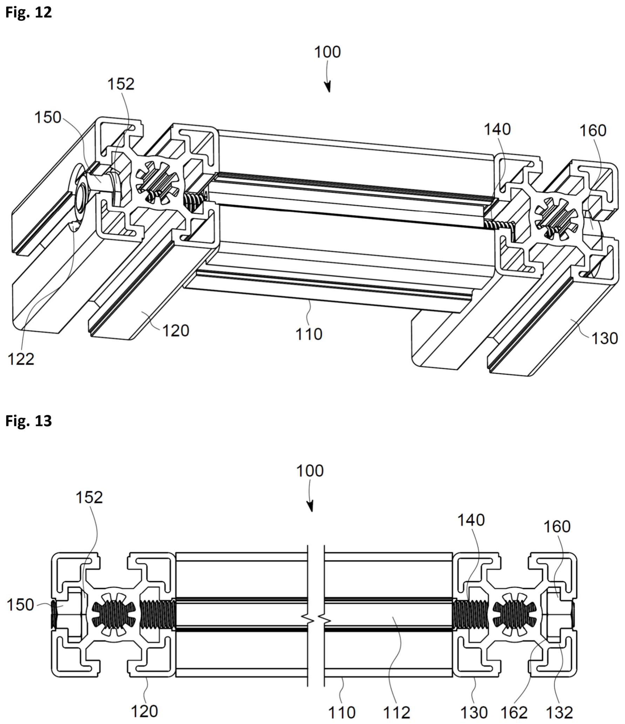

In der Figur 12 ist eine räumliche Ansicht eines Ausführungsbeispiels einer Trägerkonstruktion 100 dargestellt. Diese umfasst ein erstes Aluminium-Strebenprofil 110 sowie weitere Aluminium-Strebenprofile, nämlich ein zweites Aluminium-Strebenprofil 120 und ein drittes Aluminium-Strebenprofil 130, welche mit dem ersten Aluminium-Strebenprofil 110 verspannt werden. Die Aluminiumprofile, welche hier gezeigt sind, sind typische Aluminiumprofile mit einem Querschnitt von 40 x 40 mm und einem innen liegenden zentralen Hohlraum, welcher zentral angeordnet ist. Zudem haben diese Profile weitere äußere Hohlräume. Das Spannelement ist hier eine Gewindestange 140, welche mit Muttern 150, 160 auf beiden Seiten durch die zweiten und dritten Strebenprofile befestigt ist. Weiterhin sind noch Beilagscheiben 152, 162 vorgesehen.

Die Figur 13 zeigt eine Frontansicht des vorherigen Ausführungsbeispiels. Hierbei ist das erste Aluminium-Strebenprofil 110 durch seine Mitte geschnitten und das dritte Aluminium-Strebenprofil 130 ist durch die gleiche Ebene geschnitten dargestellt. Hier ist die Befestigung mit der Mutter 160 auf der Gewindestange 140 gut zu erkennen. Die Gewindestange 140 geht durch eine Bohrung im dritten Aluminium-Strebenprofil 130. Aussparungen 122, 132 an der Außenseite der zweiten und dritten Aluminium-Strebenprofile 120 und 130 ermöglichen die Aufnahme der Mutter und das Einführen eines Werkzeugs zum Festziehen der Mutter.

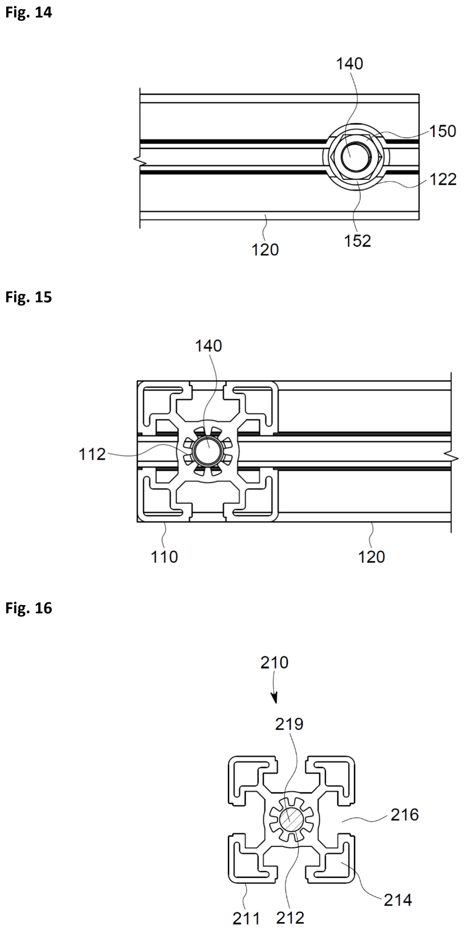

Die Figur 14 zeigt eine Seitenansicht des Ausführungsbeispiels auf das zweite Aluminium-Strebenprofil 120. Hier ist auch die Mutter 150 auf der Gewindestange 140 innerhalb der Aussparung 122 zu erkennen.

Die Figur 15 zeigt einen Schnitt in Längsrichtung durch das erste Aluminium-Strebenprofil 110. Hier ist die Gewindestange 140, im Inneren des zentralen Hohlraums 112 angeordnet.

Die Figur 16 zeigt eine besonders einfache Ausführungsform 210 mit einem einfachen quadratischen Aluminium-Strebenprofil. Hier ist ein zentrales Spannelement 219, welches ein Stab oder eine Gewindestange sein kann, in einem zentralen Hohlraum 212 angeordnet. Äußere Hohlräume 214 beziehungsweise Nuten 216 in dem Profilkörper 211 könnten ebenso zur Anordnung eines Spannelements dienen.

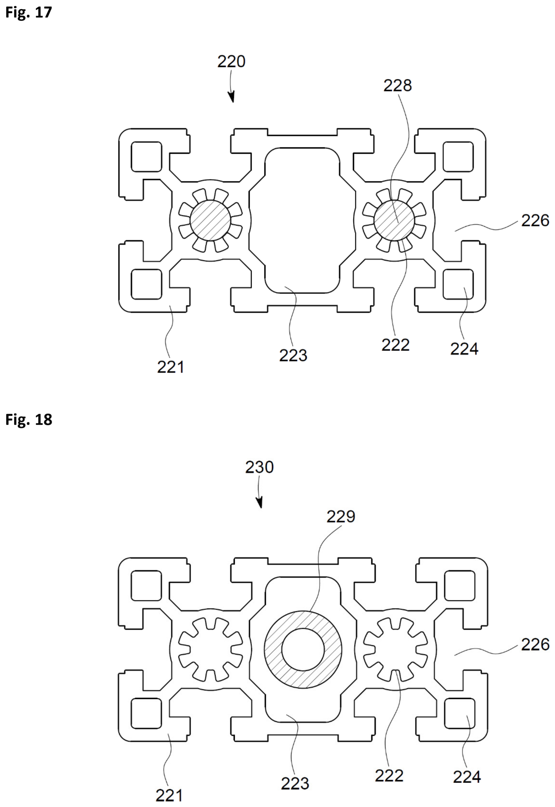

Figur 17 zeigt eine weitere Ausführungsform 220 eines anderen Aluminium-Strebenprofils. Hier ist beispielhaft ein Profil mit den Dimensionen 45 x 90 mm angegeben. Es weist zwei innere Hohlräume 222 und einen zentralen Hohlraum 223 auf. Jeder dieser Hohlräume ist geeignet zur Anordnung eines Spannelements.

Die Figur 18 zeigt eine weitere Ausführungsform 230 eines Aluminium-Strebenprofils. Hier ist in dem zentralen Hohlraum 223 ein Spannelement 229 in Form eines Rohres angeordnet.

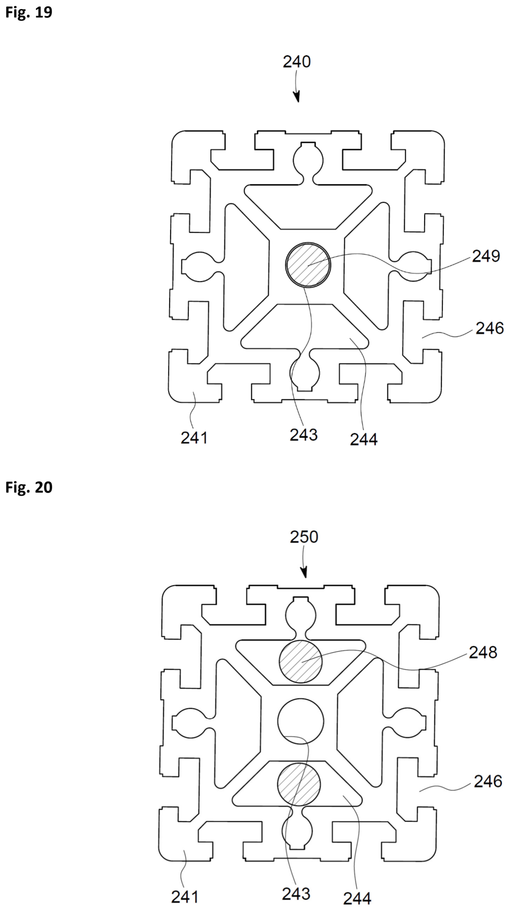

Figur 19 zeigt eine weitere Ausführungsform 240 eines massiven Aluminium-Strebenprofils mit einer Kantenlänge von 100 x 100 mm. Hier ist in einem zentralen Hohlraum 243 ein zentrales Spannelement 249 angeordnet.

Figur 20 zeigt eine weitere Ausführungsform 250 des zuvor gezeigten Strebenprofils, wobei nun innere Spannelemente 248 in den äußeren Hohlräumen 244 angeordnet sind.

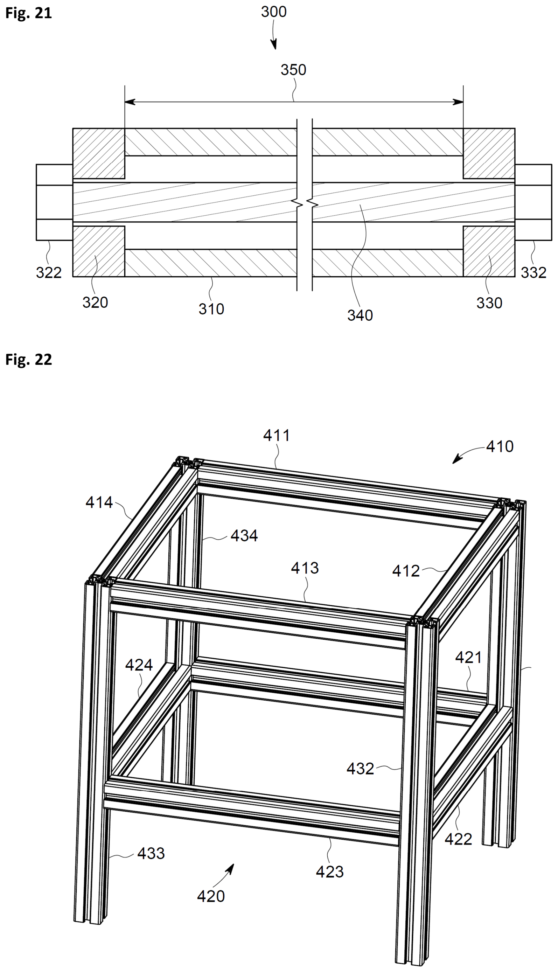

Figur 21 zeigt eine schematische Anordnung 300 zur Darstellung der Funktionsweise. Das erste Aluminium-Strebenprofil 310 hat eine Länge 350. An den Enden des Aluminium-Strebenprofils sind Endstücke 320, 330 angeordnet. Mit diesen verspannt ist ein Spannelement 340, welches beispielsweise ein Zugstab aus Stahl ist und welches an seinen Enden mittels zweier Muttern 322, 332 gehalten wird.

Figur 22 zeigt ein beispielhaftes Maschinengestell 400. Es umfasst eine erste Trägerkonstruktion 410 aus vier miteinander verbundenen Aluminium-Strebenprofilen 411, 412, 413, 414. Hier könnten beispielsweise die beiden Aluminium-Strebenprofile 411 und 413 dem ersten Aluminium-Strebenprofil entsprechen, während die Aluminium-Strebenprofile 412 und 414 sowie die optionalen senkrechten Aluminium-Strebenprofile 431, 432, 433 und 434 den weiteren Aluminium-Strebenprofilen entsprechen. Zusätzlich ist eine zweite optionale Trägerkonstruktion 420 aus vier miteinander verbundenen Aluminium-Strebenprofilen 421, 422, 423, 424 dargestellt. Grundsätzlich sind Anordnungen mit mehreren unterschiedlichen Trägerkonstruktionen möglich, beispielsweise in mehreren Ebenen übereinander.

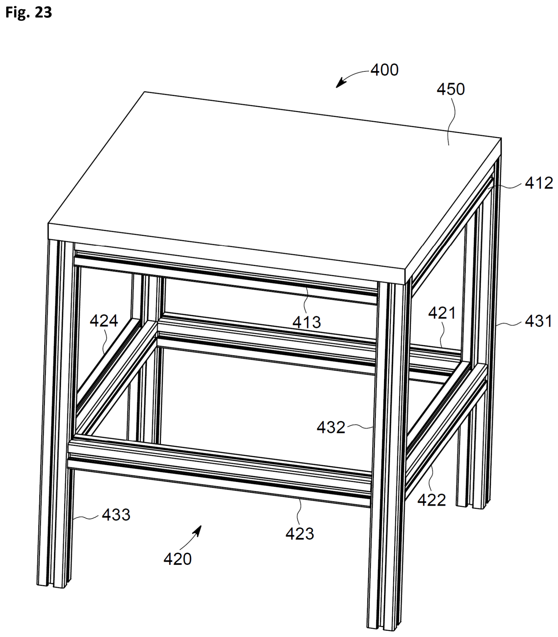

Figur 23 zeigt das Gestell der vorhergehenden Abbildung mit einer Platte (Tischplatte). Dies kann beispielsweise eine Metallplatte sein, die beispielsweise aluminium und/oder Stahl umfasst. Die Platte kann durch Befestigungsmittel (nicht dargestellt), wie z.B. Scgrauben mit den oberen Profilen (411, 412, 413, 414) verbunden bzw. verschraubt sein. Die Platte kann eine Last auf dem Gestell tragen und kann zudem für eine gleichmäßige Lasteinleitung in das Gestell sorgen. Die Platte kann auch das gestell weiter stabilisieren und/oder Resonanzen im Gestell vermeiden.

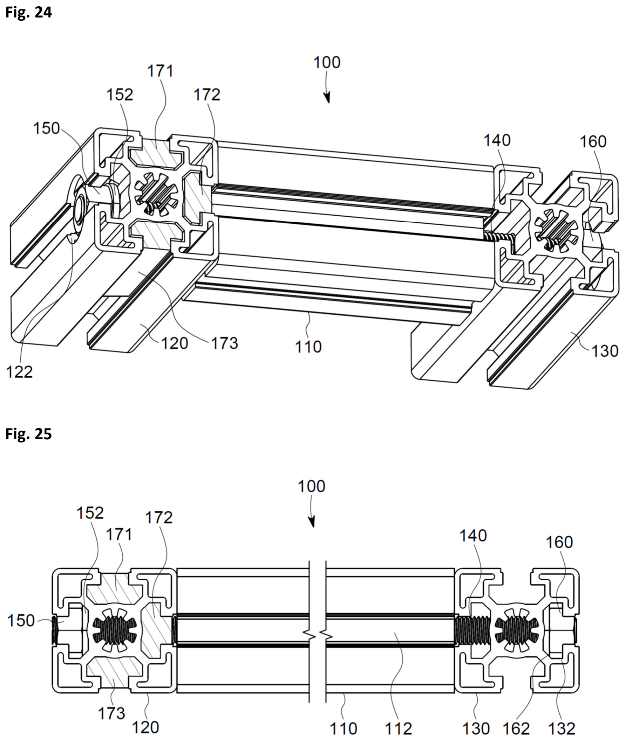

Figur 24 zeigt eine räumliche Ansicht eines Ausführungsbeispiels ähnlich der Figur 1, jedoch mit Füllstücken 171, 172 und 173. Die Füllstücke füllen bevorzugt wenigstens eine Nut in Breite und Höhe überwiegend oder vollständig aus. Sie haben eine Breite und Höhen > 70%, >80% oder >90% der Breite bzw. Höhe der jeweiligen Nut. Die Länge ist bevorzugt beschränkt auf den Bereich des Spannelements 140, beispielsweise in einem Bereich von 10-100mm oder 10-50mm oder 10-30mm. Die Füllstücke 171 und 173 sind in Nuten seitlich zum Spannelement 140 angeordnet. Das Füllstück 172 ist in einer Nut, die hier vom Spannelement 140 durchdrungen wird, angeordnet. Es können mehrere Füllstücke 172 seitlich oder auch unter bzw. um das Spannelement 140 angeordnet sein. Das Füllstück 172 kann aber auch eine Bohrung für das Spannelement 140 aufweisen. Hier sind Füllstücke nur im Profil 120 dargestellt. Es können aber auch Füllstücke in jedem anderen Profil, hier beispielsweise dem weiteren Profil 130 angeordnet sein.

Figur 25 zeigt eine teilgeschnittene Ansicht des vorigen Ausführungsbeispiels, ähnlich der Figur 2, jedoch mit Füllstücken 171, 172 und 173.

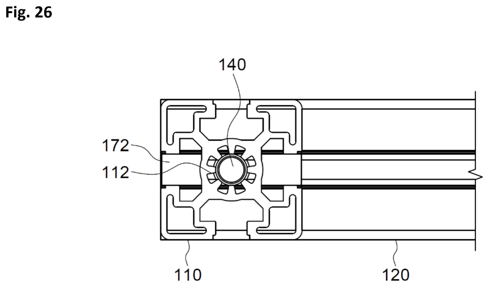

Figur 26 zeigt eine weitere geschnittene Ansicht des Ausführungsbeispiels ähnlich der Figur 4, jedoch mit einem Füllstück 172.

### Bezugszeichenliste

- 100: Trägerkonstruktion
- 110, 120, 130: Aluminium-Strebenprofile
- 112: Zentraler Hohlraum
- 122, 132: Aussparung
- 140: Spannelement (Gewindestange)
- 150, 160: Mutter
- 152, 162: Beilagscheibe
- 171, 172, 173: Füllstücke
- 210: Erste Ausführungsform eines Aluminium-Strebenprofils
- 211: Profilkörper
- 212: Zentraler Hohlraum
- 214: Äußere Hohlräume
- 216: Nuten
- 219: Zentrales Spannelement
- 220, 230: Zweite Ausführungsform eines Aluminium-Strebenprofils
- 221: Profilkörper
- 222: Innere Hohlräume
- 223: Zentraler Hohlraum
- 224: Äußere Hohlräume
- 226: Nuten
- 228: Zentrales Spannelement
- 229: Innere Spannelemente
- 240, 250: Dritte Ausführungsform eines Aluminium-Strebenprofils
- 241: Profilkörper
- 243: Zentraler Hohlraum
- 244: Äußere Hohlräume
- 246: Nuten
- 248: Innere Spannelemente
- 249: Zentrales Spannelement
- 300: Schematische Anordnung
- 310: Aluminium-Strebenprofil
- 320, 330: Endstücke
- 322, 332: Mutter
- 340: Zugstab aus Stahl
- 350: Länge des Aluminium-Strebenprofils
- 400: Maschinengestell
- 410: Erste Trägerkonstruktion
- 411, 412, 413, 414: Aluminium-Strebenprofile
- 420: Zweite Trägerkonstruktion
- 421, 422, 423, 424: Aluminium-Strebenprofile
- 431, 432, 433, 434: Senkrechte Aluminium-Strebenprofile
- 450: Tischplatte
- 500: Trägerkonstruktion
- 510: erstes Aluminiumstrebenprofil
- 512: Hohlraum
- 520: weiteres Aluminiumstrebenprofil
- 530: Verstärkungselement
- 532: Auflagefläche
- 540: Querspannelement
- 550: Schraube
- 560: drittes Aluminiumstrebenprofil
- 570: zweites Querspannelement
- 580: zweite Schraube

## Patentansprüche

1. Trägerkonstruktion (500) umfassend ein erstes Aluminium-Strebenprofil (510) sowie wenigstens ein weiteres Aluminium-Strebenprofil (520), wobei das erste Aluminium-Strebenprofil (510) eine erste Länge aufweist, und wenigstens einem Hohlraum (512) umfasst, der sich zumindest über einen Teil der ersten Länge erstreckt, und wenigstens ein Querspannelement (540) senkrecht zu dem wenigstens einem Hohlraum (512) in einem vorgegebenen Abstand zu einem ersten Ende des ersten Aluminium-Strebenprofils (510) angeordnet ist,
**dadurch gekennzeichnet, dass**
das wenigstens eine weitere Aluminium-Strebenprofil (520) mittels wenigstens einer Schraube (540) mit dem ersten Aluminium-Strebenprofil (510) verspannt ist,
wobei das erste Aluminium-Strebenprofil (510) mit seinem ersten Ende flächig auf dem wenigstens einen weiteren Aluminium-Strebenprofil (520) auf einer Auflagefläche (532) aufliegt, und
sich die wenigstens eine Schraube (550) innerhalb des wenigstens einen Hohlraums (512) erstreckt, so dass die wenigstens eine Schraube (550) mit ihrem Kopf an dem wenigstens einen weiteren Aluminium-Strebenprofil (520) aufliegt und mit ihrem Gewinde in das wenigstens eine Querspannelement (540) eingreift, so dass die wenigstens eine Schraube (550) das erste Aluminium-Strebenprofil (510) in Richtung der ersten Länge gegen das wenigstens eine weitere Aluminium-Strebenprofil (520) verspannt, und wobei ein Verstärkungselement (530) innerhalb eines dem erste Aluminium-Strebenprofil (510) zugeordneten Hohlraumes des wenigstens eines weitere Aluminium-Strebenprofils (520) derart angeordnet ist dass es diesen Hohlraum zumindest in einem Bereich der Auflagefläche (530) zumindest weitgehend ausfüllt und an dem ersten Aluminium-Strebenprofil (510) anliegt.

2. Trägerkonstruktion nach Anspruch 1,
**dadurch gekennzeichnet, dass**
die wenigstens eine Schraube (550) das wenigstens eine weitere Aluminium-Strebenprofil (520) zumindest teilweise durchdringt.

3. Trägerkonstruktion nach wenigstens einem der vorhergehenden Ansprüche,
**dadurch gekennzeichnet, dass**
das Verstärkungselement (530) eine höhere Festigkeit und/oder ein höheres Biegemoment aufweist, als das weiteren Aluminium-Strebenprofil (520) bzw. das erste Aluminium-Strebenprofil (510).

4. Trägerkonstruktion nach wenigstens einem der vorhergehenden Ansprüche,
**dadurch gekennzeichnet, dass**
das wenigstens eine Querspannelement (540) und/oder das Verstärkungselement (530) Stahl umfasst.

5. Trägerkonstruktion nach wenigstens einem der vorhergehenden Ansprüche,
**dadurch gekennzeichnet, dass**
die wenigstens eine Schraube (550) in ihrer Längsrichtung eine erste relative Dehnung aufweist und das erste Aluminium-Strebenprofil (510) in seiner Längsrichtung eine erste relative Stauchung aufweist, wobei die erste relative Dehnung größer ist als die erste relative Stauchung.

6. Trägerkonstruktion nach wenigstens einem der vorhergehenden Ansprüche,
**dadurch gekennzeichnet, dass**
die wenigstens eine Schraube (540) in ihrer Längsrichtung eine erste relative Dehnung aufweist, die im Bereich der elastischen Verformung liegt.

7. Trägerkonstruktion nach wenigstens einem der vorhergehenden Ansprüche,
**dadurch gekennzeichnet, dass**
die wenigstens eine Schraube (540) in ihrer Längsrichtung eine erste relative Dehnung aufweist, die im Bereich von >20% und vorzugsweise <90% der Streckgrenze oder der 0,2-%-Dehngrenze des Materials der wenigstens eine Schraube (540) liegt.

8. Trägerkonstruktion nach wenigstens einem der vorhergehenden Ansprüche,
**dadurch gekennzeichnet, dass**
das Aluminium-Strebenprofil (510) eine Querschnittsfläche aufweist, die wenigstens um den Faktor 3 größer ist als die Querschnittsfläche der wenigstens eine Schraube (540).

9. Trägerkonstruktion nach wenigstens einem der vorhergehenden Ansprüche,
**dadurch gekennzeichnet, dass**
die Druckkraft größer als 1kN und bevorzugt größer als 10kN ist.

10. Trägerkonstruktion nach wenigstens einem der vorhergehenden Ansprüche,
**dadurch gekennzeichnet, dass**
die Trägerkonstruktion mehrere Schrauben in mehreren parallelen Hohlräumen umfasse.

11. Maschinengestell umfassend wenigstens eine Trägerkonstruktion nach wenigstens einem der vorhergehenden Ansprüche.
